# EUROPEAN PATENT SPECIFICATION

(11) **EP 2 930 866 B1**
(45) Date of publication and mention of the grant of the patent: **28.11.2018**
(21) Application number: 14305521.8
(22) Date of filing: 09.04.2014
(51) Int. Cl.: H04B 10/61, H04B 10/516

(54) **Method, apparatus, and computer program for an optical communication system**
Verfahren, Vorrichtung, und Computerprogramm für ein optisches Kommunikationssystem
Procédé, appareil et programme informatique pour système de communication optique

(43) Date of publication of application: 14.10.2015
(73) Proprietor: Alcatel Lucent, 91620 Nozay (FR)
(72) Inventor: Charlet, Gabriel, 91620 Nozay (FR); Schmalen, Laurent, 70435 Stuttgart (DE)
(74) Representative: Nokia EPO representatives

(56) References cited:
- US-A1- 2012 076 502
- US-A1- 2012 082 453
- XIANG ZHOU ET AL: "Rate-adaptable optics for next generation long-haul transport networks", IEEE COMMUNICATIONS MAGAZINE, IEEE SERVICE CENTER, PISCATAWAY, US, vol. 51, no. 3, 1 March 2013 (2013-03-01), pages 41-49, XP011505041, ISSN: 0163-6804, DOI: 10.1109/MCOM.2013.6476864
- QUNBI ZHUGE ET AL: "Spectral Efficiency-Adaptive Optical Transmission Using Time Domain Hybrid QAM for null Agile Optical Networks", JOURNAL OF LIGHTWAVE TECHNOLOGY, IEEE SERVICE CENTER, NEW YORK, NY, US, vol. 31, no. 15, 1 August 2013 (2013-08-01), pages 2621-2628, XP011519298, ISSN: 0733-8724, DOI: 10.1109/JLT.2013.2271634

## Description

Embodiments of the present disclosure relate to communication systems and, more particularly, to methods, apparatuses and computer programs for adjusting a reach of an optical signal of an optical communication system.

### Background

Optical systems may connect different cities and transmission reach may vary from one link to another. For short distances, more complex modulation formats may be used to transport higher bit or data rates. However, moving from one modulation format to a next higher-order one generates a performance degradation with respect to susceptibility to noise and/or distortion. For example, 16QAM (QAM = Quadrature Amplitude Modulation) may allow doubling a bit rate compared to Quadrature Phase-Shift Keying (QPSK). On the other hand, a transmission reach may be reduced by a factor of about five. With intermediate formats, such as 8QAM, for example, the reach difference may be around a factor of two or more compared to the next modulation format.

Intermediate modulation formats, for example between 8QAM and QPSK may be obtained by "set partitioning". While 8QAM transports three bits per symbol and QPSK two bits per symbol, Set Partitioned 8QAM (SP-8QAM) introduces a coding between consecutive modulation symbols allowing to code five bits with two modulation symbols (2.5bits per symbol) and providing intermediate reach. Sending a mix of QPSK symbols and 8QAM symbols has already been proposed. Even if a performance gap between one modulation format and the next higher-order one may be reduced, this gap may still be around 2dB between QPSK and SP-8QAM. Sending a mix of various formats may provide a finer granularity, but performance is slightly worse.

The paper XIANG ZHOU ET AL: "Rate-adaptable optics for next generation long-haul transport networks", IEEE COMMUNICATIONS MAGAZINE, IEEE SERVICE CENTER, PISCATAWAY, US, vol. 51, no. 3, 1 March 2013 (2013-03-01), pages 41-49, discusses emerging rate-adaptable optical transmission technology and how this technology may be employed to further reduce the transport network cost to meet ever growing bandwidth demand in the core network. Two different types of transponders are considered: those adjusting either the transported bit rate (i.e,, client data rate) or the symbol rate (with a fixed hit rate).

### Summary

Some simplifications may be made in the following summary, which is intended to highlight and introduce some aspects of the various example embodiments, but such simplifications are not intended to limit the scope of embodiments. Detailed descriptions of a preferred exemplary embodiment adequate to allow those of ordinary skill in the art to make and use the inventive concepts will follow in later sections.

Various embodiments provide methods, apparatuses, and computer programs for an optical communication system. Embodiments may provide an efficient concept for adjusting a desired reach of an optical signal.

According to a first aspect of the present disclosure it is provided a method for an optical communication system. The method includes providing information on a desired reach of an optical signal and determining, based on the desired reach, a combination of a modulation format and a forward error correction code for the optical signal. The modulation format is determined from a plurality of modulation formats, wherein modulation symbols of different modulation formats comprise different numbers of bits. The forward error correction code is determined from a plurality of different forward error correction codes having different code rates.

In other words, the method includes adjusting a maximum reach of an optical signal. Thereby the maximum reach may correspond to a maximum distance at which a predefined quality criterion for the optical signal is still fulfilled. In some embodiments, the predefined quality criterion may correspond to a predefined maximum error rate of the optical signal at the desired or maximum reach, for example, a predefined bit or symbol error rate. The act of determining the combination of the modulation format and the forward error correction code may include selecting one of a plurality of modulation formats for the optical signal, wherein modulation symbols of different modulation formats comprise different numbers of bits, and selecting one of a plurality of forward error correction codes for the optical signal, wherein different forward error correction codes have different code rates. Thereby the modulation format and the forward error correction code may be selected such that a combination of the selected modulation format and the selected forward error correction code yields a maximum throughput or spectral efficiency at the desired or maximum reach.

In some embodiments, the plurality of modulation formats may comprise at least a first and a second modulation format. Thereby a modulation symbol of the first modulation format may comprise a larger numbers of bits than a modulation symbol of the second modulation format. In particular, a modulation symbol of the first modulation format may comprise in average at most one bit more than a modulation symbol of the second modulation format. For example, the first modulation format may (in average) map *m*+*x* (*x* ≤ 1) bits to a modulation symbol, while the second modulation format may (in average) map m bits to a modulation symbol. In some embodiments, the modulation formats may include digital amplitude and/or phase modulation formats, such as Quadrature Amplitude Modulation (QAM) and/or Phase-Shift Keying (PSK) formats.

In some embodiments, a Signal-to-Noise Ratio (SNR) at which the predefined quality criterion, for example a maximum tolerable error rate, is fulfilled for a signal modulated with the first modulation format differs from an SNR at which the predefined quality criterion is fulfilled for the signal modulated with the second modulation format by a predefined performance difference. The error rate may be a Bit Error Rate (BER) or a Frame Error Rate (FER) in some embodiments. In some embodiments, the performance difference between the first and the second modulation format may be in the range from 1.5 to 2.5 dB.

In some embodiments, a coding gain difference between a first and a second forward error correction code of the plurality of forward error correction codes may be chosen dependent on said performance or SNR difference. In particular, the coding gain difference may substantially correspond to a ratio or a relationship between the performance difference and a number of the plurality of forward error correction codes. That is to say, the coding gain difference between two adjacently performing forward error correction codes may substantially correspond to the performance difference between two adjacently performing modulation formats divided by the number of forward error correction codes.

In one or more embodiments, the plurality of modulation formats may include two or more adjacent formats of the following modulation formats:
- Set Partitioned Quaternary Phase-Shift Keying (SP-QPSK);
- Quaternary Phase-Shift Keying (QPSK);
- Set Partitioned 8-Quadrature Amplitude Modulation (SP-8QAM);
- 8-Quadrature Amplitude Modulation (8QAM);
- 16-Quadrature Amplitude Modulation (16QAM);
- 32-Quadrature Amplitude Modulation (32QAM);
- 64-Quadrature Amplitude Modulation (64QAM);
- 128-Quadrature Amplitude Modulation (128QAM); and
- 256-Quadrature Amplitude Modulation (256QAM).

In some embodiments, the plurality of forward error correction codes may comprise a first and a second forward error correction code. Thereby a code rate of the first forward error correction code may be larger than the code rate of the second forward error correction code, meaning that a coding overhead of the first forward error correction code may be smaller than the coding overhead of the second forward error correction code. In one embodiment, the code rate of the first forward error correction code may be 5/6 ± 5%, corresponding to about 20% coding overhead The code rate of the second forward error correction code may be 10/13 ± 5%, corresponding to about 30% coding overhead. Note that other embodiments may use different codes rates. For example, 20% coding overhead means that a FEC encoder creates an output bit stream having 20% more bits than the input bit stream. Thereby, the additional bits are commonly referred to as parity bits.

In some embodiments, determining or selecting the forward error correction code may comprise determining the second forward error correction code and/or an adjacent lower-order modulation format, if a maximum reach of a determined modulation format in combination with the first forward error correction code is smaller than the desired reach of the optical signal.

In one or more embodiments, the plurality of modulation formats may comprise a first and a second modulation format, wherein modulation symbols of the first modulation format comprise a larger numbers of bits than modulation symbols of the second modulation format. Determining the modulation format may then comprise determining or selecting the second modulation format and the first forward error correction code (having higher code rate), if a maximum reach of the first modulation format with the second forward error correction code (having lower code rate) is smaller than the desired reach.

In some embodiments, determining or selecting the first forward error correction code may comprise applying the second forward error correction code and puncturing parity bits generated by the second forward error correction code. In other embodiments, determining or selecting the second forward error correction code may comprise concatenating the first and a further forward error correction code to yield the second forward error correction code.

In some embodiments, the method may further include transmitting information on the combination of the modulation format and the forward error correction code to a receiver of the optical signal.

In some embodiments, determining the combination of the modulation format and the forward error correction code may comprise using the desired reach to access one or more entries of a Lookup Table (LUT) stored in a computer-readable memory, the one or more entries being indicative of a combination of a modulation format and a forward error correction code corresponding to the desired reach. Thereby the corresponding modulation format / forward error correction code combination may lead to a maximum throughput by at the same time fulfilling a predefined quality criterion for the optical signal at the desired reach.

According to a further aspect of the present disclosure it is provided an apparatus for an optical communication system. The apparatus comprises an interface module to provide or receive information on a desired reach of an optical signal. Further, the apparatus comprises a control module to determine, based on the desired reach, a combination of a modulation format and a forward error correction code for the optical signal. The modulation format is determined from a plurality of available modulation formats, wherein modulation symbols of different modulation formats comprise different numbers of bits. The forward error correction code is determined from a plurality of available different forward error correction codes having different code rates.

According to yet a first aspect of the present disclosure it is provided a method for receiving a forward error encoded and modulated optical signal. The method includes receiving information about a combination of a modulation format and a forward error correction code of the optical signal. Based on the received information, one of a plurality of modulation formats is determined to demodulate the optical signal, wherein modulation symbols of different modulation formats comprise different numbers of bits. Based on the received information, also one of a plurality of different forward error correction codes having different code rates is determined to decode the optical signal.

Embodiments further provide an apparatus for receiving a forward error encoded and modulated optical signal. The apparatus comprises a receiver module to receive information about a combination of a modulation format and a forward error correction code of the optical signal. The apparatus further comprises a control module. The control module is configured to determine, based on the received information, one of a plurality of modulation formats to demodulate the optical signal. Modulation symbols of different modulation formats comprise different numbers of bits. The control module is further configured to determine, based on the received information, one of a plurality of forward error correction codes to decode the optical signal. Different forward error correction codes have different code rates.

Some embodiments comprise digital circuitry installed within the apparatuses. Such a digital control circuitry, e.g., a Digital Signal Processor (DSP), a Field-Programmable Gate Array (FPGA), an Application-Specific Integrated Circuit (ASIC), or a general purpose processor may be coupled to memory circuitry and needs to be configured accordingly by hardware and/or software. Hence, yet further embodiments also provide a computer program having a program code for performing embodiments of the method, when the computer program is executed on a computer or a programmable hardware device.

Embodiments allow minimizing unnecessary margins in a system by selecting the best combination of modulation format and FEC coding overhead to maximize the capacity (through modulation format selection mainly) and optimizing the spectrum occupancy (by selecting the lowest FEC coding overhead if possible or selecting the largest one if required). The FEC with the lowest overhead may also require lower power consumption.

### Brief description of the Figures

Some example embodiments of apparatuses and/or methods will be described in the following by way of example only, and with reference to the accompanying figures, in which
- Fig. 1: illustrates a flow chart of an example embodiment of a transmitter method for an optical communication system;
- Fig. 2: illustrates a flow chart of an example embodiment of a receiver method for an optical communication system;
- Fig. 3a: illustrates a block diagram of an example embodiment of an apparatus for an optical communication system;
- Fig. 3b: illustrates a diagram depicting available spectrum efficiencies of various modulation formats;
- Fig. 4: illustrates an example embodiment of a transmitter and a receiver of an optical communication system;
- Fig. 5: illustrates a further example embodiment of a transmitter and a receiver of an optical communication system; and
- Figs. 6a, b: illustrate example embodiments for implementing variable rate coding.

### Description of Embodiments

Various example embodiments will now be described more fully with reference to the accompanying drawings in which some example embodiments are illustrated.

Accordingly, while example embodiments are capable of various modifications and alternative forms, embodiments thereof are shown by way of example in the drawings and will herein be described in detail. It should be understood, however, that there is no intent to limit example embodiments to the particular forms disclosed, but on the contrary, example embodiments are to cover all modifications, equivalents, and alternatives falling within the scope of the claims. Like numbers refer to like elements throughout the description of the figures. It will be understood that, although the terms first, second, etc. may be used herein to describe various elements, these elements should not be limited by these terms. These terms are only used to distinguish one element from another. For example, a first element could be termed a second element, and, similarly, a second element could be termed a first element, without departing from the scope of example embodiments. As used herein, the term "and/or" includes any and all combinations of one or more of the associated listed items.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g.., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/ or "including," when used herein, specify the presence of stated features, integers, steps, operations, elements and/or components, but do not preclude the presence or addition of one or more other features, integers, steps, operations, elements, components and/ or group thereof.

It should also be noted that in some alternative implementations, the functions/ acts noted may occur out of the order noted in the figures. For example, two figures shown in succession may in fact be executed substantially concurrently or may sometimes be executed in the reverse order, depending upon the functionality/acts involved.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Portions of example embodiments and a corresponding detailed description are presented in terms of software, or algorithms and symbolic representations of operation of data bits within a computer memory. These descriptions and representations are the ones by which those of ordinary skill in the art effectively convey the substance of their work to others of ordinary skill in the art. An algorithm, as the term is used here, and as it is used generally, is conceived to be a self-consistent sequence of steps leading to a desired result. The steps are those requiring physical manipulations of physical quantities. Usually, though not necessarily, these quantities take the form of optical, electrical, or magnetic signals capable of being stored, transferred, combined, compared, and otherwise manipulated. It has proven convenient at times, principally for reasons of common usage, to refer to these signals as bits, values, elements, symbols, characters, terms, numbers, or the like.

In the following description, illustrative embodiments will be described with reference to acts and symbolic representations of operations (e.g., in the form of flowcharts) that may be implemented as program modules or functional processes including routines, programs, objects, components, data structures, etc., that perform particular tasks or implement particular abstract data types and may be implemented using existing hardware at existing network elements or control nodes. Such existing hardware may include one or more Central Processing Units (CPUs), Digital Signal Processors (DSPs), Application-Specific Integrated Circuits, Field Programmable Gate Arrays (FPGAs), computers, or the like.

Unless specifically stated otherwise, or as is apparent from the discussion, terms such as "processing" or "computing" or "calculating" or "determining" or "displaying" or the like, refer to the action and processes of a computer system, or similar electronic computing device, that manipulates and transforms data represented as physical, electronic quantities within the computer system's registers and memories into other data similarly represented as physical quantities within the computer system memories or registers or other such information storage, transmission or display devices.

As disclosed herein, the term "storage medium", "storage unit" or "computer readable storage medium" may represent one or more devices for storing data, including Read Only Memory (ROM), Random Access Memory (RAM), magnetic RAM, core memory, magnetic disk storage mediums, optical storage mediums, flash memory devices and/ or other tangible machine readable mediums for storing information. The term "computer-readable medium" may include, but is not limited to, portable or fixed storage devices, optical storage devices, and various other mediums capable of storing, containing or carrying instruction(s) and/or data.

Furthermore, example embodiments may be implemented by hardware, software, firmware, middleware, microcode, hardware description languages, or any combination thereof. When implemented in software, firmware, middleware or microcode, the program code or code segments to perform the necessary tasks may be stored in a machine or computer readable medium such as a computer readable storage medium. When implemented in software, a processor or processors will perform the necessary tasks.

A code segment may represent a procedure, function, subprogram, program, routine, subroutine, module, software package, class, or any combination of instructions, data structures or program statements. A code segment may be coupled to another code segment or a hardware circuit by passing and /or receiving information, data, arguments, parameters or memory contents. Information, arguments, parameters, data, etc. may be passed, forwarded, or transmitted via any suitable means including memory sharing, message passing, token passing, network transmission, etc.

In the following, some example embodiments of methods, apparatuses and computer programs for adjusting a reach of an optical signal of an optical communication system will be described.

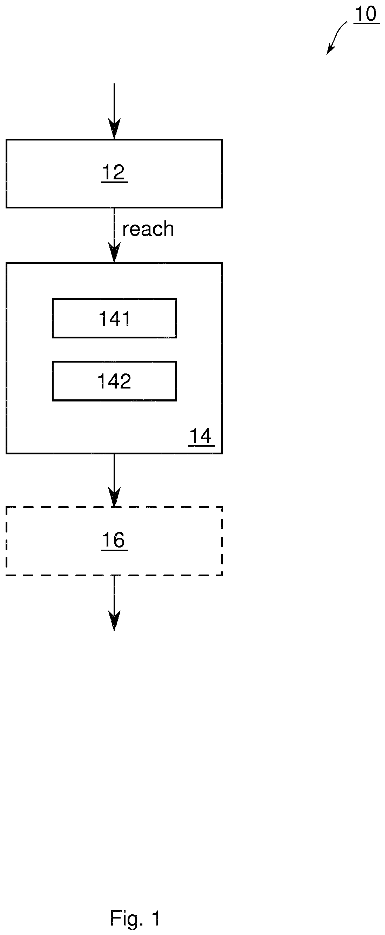

**Fig. 1** illustrates a schematic flow chart of an example embodiment of a method 10 for an optical communication system.

Method 10 comprises an act 12 of providing information on a desired reach of an optical signal. In some embodiments, the desired reach corresponds to a desired distance from an optical transmitter at which a predefined quality criterion for the optical signal shall be fulfilled. For example, the desired reach may correspond to a distance at which a certain error rate, such as a Bit Error Rate (BER) or Frame Error Rate (FER), for the optical signal received at said distance shall be fulfilled. At the same time the data throughput may be required to be as high as possible, i.e. maximum. For example, a predefined FER after decoding may be 10⁻¹⁵. The decision could be also based on an estimation of the SNR at the desired reach. A maximum achievable distance, and hence a maximum reach, may depend on various parameters including conditions of a transmission channel itself, such as an optical fiber, or environmental surroundings of the transmission channel. Further parameters potentially influencing the quality of the optical signal may include the quality of transmitters, repeaters, and receivers.

Method 10 further comprises an act 14 of determining, based on the desired reach, a combination of a modulation format and a Forward Error Correction (FEC) code for the optical signal. Act 14 comprises determining 141 the modulation format from a plurality of modulation formats, wherein modulation symbols of different modulation formats comprise different numbers of bits, and determining 142 the FEC code from a plurality of different FEC codes having different code rates, respectively. In some embodiments, the modulation format and/or the FEC code may be selected. In other embodiments they may be computed.

Note that an order of the acts 141 and 142 may vary in embodiments. While in some embodiments the act 141 of determining or selecting one of a plurality of available modulation formats may be performed after or downstream to the act 142 of determining or selecting one of a plurality of available FEC codes, the order may be vice versa in other embodiments. Modulation may be performed downstream to FEC encoding in some embodiments.

According to some embodiments, acts 14, 141 and 142 may be performed such that a combination of the determined or selected modulation format and the determined or selected FEC code yields a maximum data throughput or spectral efficiency at the desired reach. Hence, a combination of a modulation format and a FEC code yielding the highest capacity or throughput for a prevailing condition of the optical transmission channel may be selected. For example, a combination of a modulation format mapping the possibly highest number of bits to a modulation symbol and a FEC code with the possibly smallest coding overhead may be selected to fit the prevailing condition of the optical transmission channel.

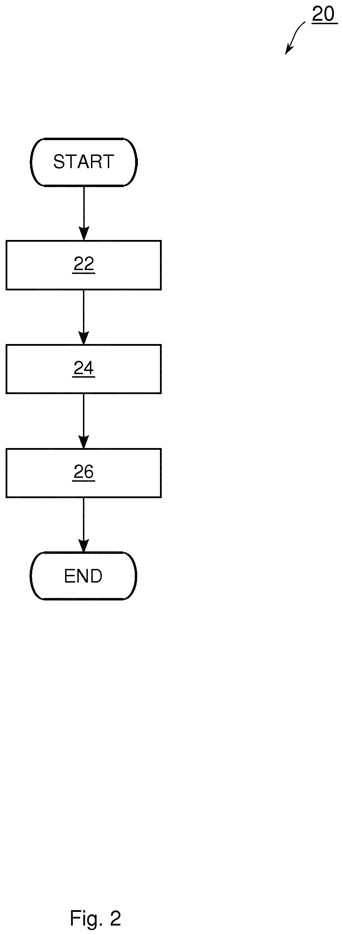

In some embodiments, the method 10 may further include an optional act 16 of transmitting information on the combination of the determined modulation format and the determined FEC code to a remote receiver of the optical signal. An example embodiment of a corresponding receiver method 20 is illustrated in **Fig. 2****.**

Receiver method 20 comprises an act 22 of receiving the information about a combination of a modulation format and a FEC code of the optical signal. The method 20 further includes an act 24 of determining or selecting, based on the received information, one of a plurality of modulation formats to demodulate the optical signal, wherein modulation symbols of different modulation formats comprise different numbers of bits. Further, the method 20 comprises an act 26 of determining or selecting, based on the received information, one of a plurality of FEC codes to decode the optical signal, wherein different FEC of the plurality have different code rates.

The skilled person having benefit from the present disclosure will appreciate that the schematic flow-charts presented in Figs. 1 and 2 may also be interpreted as block diagrams of respective transmitter and receiver apparatuses comprising digital and/or analog circuitry or modules configured to perform the respective acts. Hence, the reference numerals in Figs. 1 and 2 may also denote modules for performing the respective acts.

A transmitter/receiver apparatus may correspond to one or more transmitter/receiver devices, one or more transmitter/receiver units, or any other means for transmitting/receiving. It may comprise typical transmitter/receiver components, such as one or more elements of the group of one or more Low-Noise Amplifiers (LNAs), one or more Power Amplifiers (PAs), one or more filters or filter circuitry, one or more diplexers, one or more duplexers, one or more Analog-to-Digital converters (A/D), one or more Digital-to-Analog converters (D/A), one or more modulators or demodulators, one or more mixers, one or more equalizers, etc.

As will become apparent in the sequel, one idea of embodiments is to select from two or more FEC codes to provide a performance substantially intermediate compared to available modulation formats supported by a transmitter and a receiver. The most performing FEC code may have a higher overhead than the other one. Hence, in some embodiments, the plurality of FEC codes may comprise a first and a second FEC code. Thereby a code rate of the first FEC code may be larger than the code rate of the second FEC code. In other words, a coding overhead of the first FEC code may be smaller than the coding overhead of the second FEC code.

If a constant bit rate of information bits shall be transported, the more performing FEC code having the higher coding gain will generate a signal with slightly larger symbol rate, also known as baud or modulation rate. If a performance gap between various adjacent modulation formats is around 2 dB, for example, two FEC coding schemes with coding gain varied by about 1dB (2dB/2FEC) may be implemented, but only one code may be activated at each time. If three FEC codes are available, for example, the coding gain between adjacently performing FEC codes may be varied by 0.66dB (corresponding to 2dB/3FEC). Hence, in some embodiments, a Signal-to-Noise Ratio (SNR) at which the predefined quality criterion is fulfilled for a signal modulated with the first modulation format may differ from an SNR at which the predefined quality criterion is fulfilled for the signal modulated with the second modulation format by a predefined performance difference or performance gap. In some embodiments, the performance difference between the first and the second modulation format may be in the range from 1.5 to 2.5 dB, in particular around 2 dB. The coding gain difference may substantially correspond to a ratio or relationship between the performance gap and a number of the plurality of FEC codes. That is to say, the coding gain between adjacently performing FEC codes may correspond to the performance gap (e.g. in dB) between adjacently performing modulation formats divided by the number of available FEC codes per modulation format (e.g. two, three, four, etc.).

An example embodiment of the plurality of available modulation formats is indicated below in **Table 1.**

**Table 1**

| Format/FEC | Bit rate | Reach | Reach (dB) |
|---|---|---|---|
| SP-QPSK | 75 | 1.65 | +2dB |
| QPSK | 100 | 1 | Ref |
| SP-8QAM | 125 | 0.64 | -2dB |
| 8QAM | 150 | 0.4 | -4dB |
| 16QAM | 200 | 0.2 | -7dB |
| 32QAM | 250 | 0.1 | -10dB |

Here, the plurality of modulation formats includes the following adjacent modulation formats:
- Set Partitioned Quaternary Phase-Shift Keying (SP-QPSK);
- Quaternary Phase-Shift Keying (QPSK);
- Set Partitioned 8-Quadrature Amplitude Modulation (SP-8QAM);
- 8-Quadrature Amplitude Modulation (8QAM);
- 16-Quadrature Amplitude Modulation (16QAM); and
- 32-Quadrature Amplitude Modulation (32QAM).

SP-QPSK introduces a coding between consecutive modulation symbols allowing one to code three bits with two modulation symbols, leading to an average mapping of 1.5 bits per modulation symbol (i.e., 3 bits when two polarizations of the light are used). The next higher-ordered modulation format QPSK (also referred to as 4PSK or 4QAM) uses four points on the constellation diagram, equispaced around a circle. With four phases, QPSK can encode two bits per modulation symbol (i.e., 4 bits when the 2 polarizations of the light are used). The next higher-ordered modulation format SP-8QAM introduces a coding between consecutive modulation symbols allowing one to code five bits with two modulation symbols, leading to an average mapping of 2.5 bits per modulation symbol (i.e., 5 bits when the 2 polarizations of the light are used). The next higher-ordered modulation format 8QAM maps three bits to a modulation symbol (i.e., 6 bits when the 2 polarizations of the light are used). The next higher-ordered modulation format 16QAM maps four bits to a modulation symbol. The next higher-ordered modulation format 32QAM maps five bits to a modulation symbol. Note that one or more of the listed QAM modulation formats could also be replaced by PSK modulation formats, respectively. Hence, in some embodiments, the plurality of modulation formats may comprise at least a first and a second modulation format. Thereby a modulation symbol of the first modulation format may comprise a larger numbers of bits than a modulation symbol of the second modulation format. This means that the first modulation format is of higher order than the second modulation format. In the embodiments of Table 1, a modulation symbol of the first modulation format, e.g. 16QAM, may comprise in average at most one bit more than a modulation symbol of the (adjacent) second modulation format, e.g. 8QAM. That is to say, in example embodiments, adjacent modulation formats do not differ by more than one bit per modulation symbol (and per light polarization).

As can be seen from Table 1, a maximum achievable bit rate increases with the number of bits mapped to a modulation symbol. While SP-QPSK may achieve up to 75% of the QPSK reference bit rate (100%), 32QAM may achieve up to 250% of the QPSK reference bit or data rate. As the person having benefit from the present disclosure will appreciate, the higher the order of the modulation format, the higher will be the error rate (e.g. BER) at a given SNR corresponding to a certain distance or length of the optical communication channel. For example, given a reference error rate at a reference SNR corresponding to a reference reach (e.g., 1) for QPSK, said reference error rate may be reached for the higher-order SP-8QAM at an SNR which is about 2 dB higher than the reference SNR of the lower-order QPSK. In other words, the error rate of higher-order SP-8QAM at the reference SNR will be higher than the reference error rate of lower-order QPSK. For example, the reference error rate may be a maximum tolerable error rate for optical communications. This also means that the distances that can be served become smaller for higher-order modulation formats.

A performance difference between two consecutives or adjacent modulation formats of the example illustrated in Table 1 is close to 2dB for most of the modulation formats, except for 16QAM and the adjacent higher-order 32QAM, which exhibit a larger performance gap compared to previous, partly because of implementation penalty considerations. Hence, one example embodiment proposes to design two FEC codes having about 1dB performance or coding gain difference, which is about half of the performance gap between the listed adjacent modulation formats. In an example embodiment, such coding gain difference can be obtained by using a first FEC code with about 20% overhead while the second one may have a larger overhead set to about 30%. The coding gain difference of 1dB is approximately the coding gain difference predicted by information theory. The coding gain difference may however also depend on the modulation format and the channel characteristics. If we consider for instance QPSK modulation with Additive White Gaussian Noise (AWGN), the achievable SNR gain by using a 30% overhead FEC code instead of a 20% overhead FEC code amounts to approximately 0.93dB, while in the case of 16-QAM, the achievable SNR gain amounts in this case to 1.13dB. Hence, in some embodiments, the plurality of FEC codes may comprise a first and a second FEC code, wherein a code rate of the first FEC code is larger than the code rate of the second FEC code. In one embodiment, the code rate of the first FEC code may be 5/6 ± 5% thereof, corresponding to about 20% coding overhead The code rate of the second forward error correction code may be 10/13 ± 5% thereof, corresponding to about 30% coding overhead.

The person having benefit from the present disclosure will appreciate that a FEC code is a technique used for controlling errors in data transmission over unreliable or noisy communication channels. A transmitter may encode a message in redundant way by using an error-correction code. The redundancy may allow the receiver to detect a limited number of errors that may occur anywhere in the message, and to correct these errors without retransmission. FEC codes include convolutional codes and block codes. In some embodiments, the plurality of FEC codes may include a plurality of different or variable rate Low-Density Parity-Check (LDPC) codes. In general, however, any other FEC code may be used.

If an optical transponder shall be designed for 100 Gbits/s Polarization Division Multiplexing (PDM) QPSK, for example, a line bit rate may either be 120 Gbits/s (in 20% overhead case) or 130 Gbits/s (in 30% overhead case). The baud rate may thus either be 30 Gbaud per polarization or 32.5 Gbaud per polarization. In order to optimize the capacity transported on a single fiber in Wavelength Division Multiplex (WDM) condition, channel or wavelength spacing should be selected according to the baud rate. The person having benefit from the present disclosure will appreciate that WDM is a technology which multiplexes a number of optical carrier signals onto a single optical fiber by using different wavelengths (e.g. colors) of laser light. For example, if we assume that wavelength or channel spacing should be 10% wider than baud rate, this would correspond to 33 GHz channel spacing (in the 20% overhead case) or 35.7GHz (in the 30% overhead case).

If the required (normalized) reach is equal to 1.1 (1 could correspond to 3000km in example systems), only 75 Gbits/s capacity can be transported with conventional methods (every 33GHz). If a larger FEC overhead may be selected, the available choices are indicated in the following **Table 2.**

**Table 2**

| Format/FEC | Bit rate | Reach | Reach (dB) |
|---|---|---|---|
| SP-QPSK (30%) | 75 | 2.1 | +3dB |
| SP-QPSK (20%) | 75 | 1.65 | +2dB |
| QPSK (30%) | 100 | 1.25 | +1dB |
| QPSK (20%) | 100 | 1 | Ref |
| SP-8QAM (30%) | 125 | 0.8 | -1dB |
| SP-8QAM (20%) | 125 | 0.64 | -2dB |
| 8QAM (30%) | 150 | 0.5 | -4dB |
| 8QAM (20%) | 150 | 0.4 | -4dB |
| 16QAM (30%) | 200 | 0.25 | -6dB |
| 16QAM (20%) | 200 | 0.2 | -7dB |
| 32QAM (30%) | 250 | 0.125 | -9dB |
| 32QAM (20%) | 250 | 0.1 | -10dB |

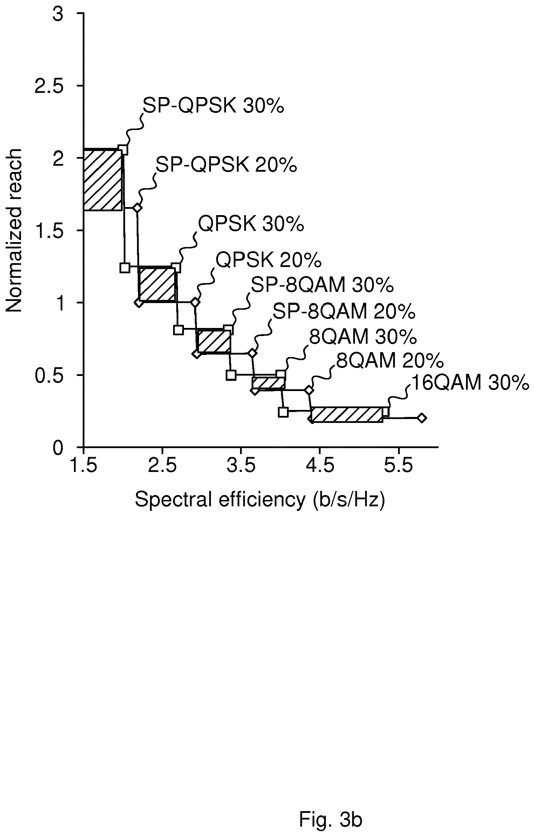

As can be seen from the example of **Table 2,** each available modulation format may have associated thereto at least two different rate FEC codes, for example, one having 20% coding overhead, the other one having 30% coding overhead. As will be appreciated by the person having benefit from the present disclosure, using the same modulation format in combination with the FEC code having the higher coding overhead leads to an increase of the (maximum) reach, respectively. For example, 100 Gbits/s may be transported up to 1.25 reach using 30% FEC code overhead with QPSK modulation. Nevertheless, channel spacing might be increased for example to 35.7 GHz, a spacing which may still offer a larger spectral efficiency value compared to for example 75 Gbits/s in 33GHz (from 2.27b/s/Hz to 2.8b/s/Hz), corresponding to SP-QPSK with 20% overhead. Hence, the spectral efficiency (as well as bit rate) is higher with QPSK and 30% overhead than with the format with lower complexity (SP-QPSK) and with lower FEC overhead (20%). This can be easily seen on Fig 3b.

Given the performance difference between two adjacent modulation formats in combination with a first FEC code (e.g. 30% overhead), which may be about 2 dB in some embodiments, one can see from Table 2 that the second FEC code (e.g., 20% overhead) may be chosen such that a combination of the second FEC code with one of the adjacent modulation formats yield a performance in between the two adjacent modulation formats in combination with the first FEC code. In some embodiments, a combination of the second FEC code with one of the adjacent modulation formats may yield a performance approximately in the middle between the performances of two adjacent modulation formats in combination with the first FEC code. In some embodiments, two (or more) FEC codes may be selected to provide, for example, a performance more or less "exactly" intermediate compared to available modulation formats supported by a transmitter and a receiver of the optical communication system.

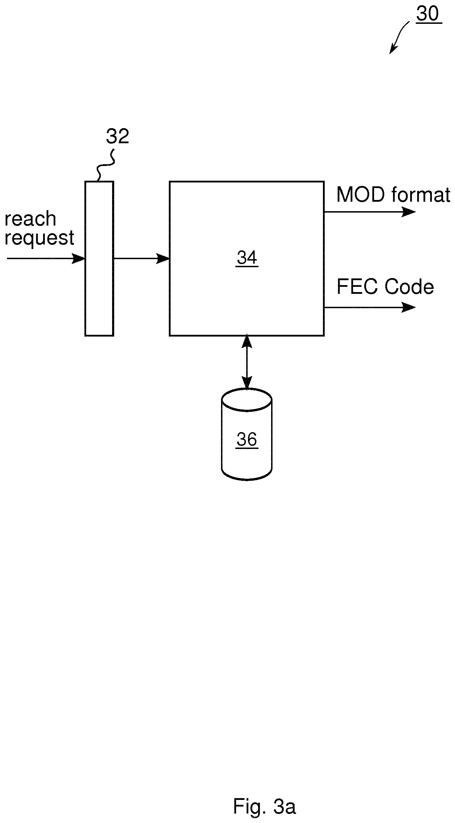

Table 2 may be interpreted as a representation of a Lookup Table (LUT) stored in a database or computer-readable memory. A block diagram of an example embodiment of an apparatus 30 for an optical communication system is illustrated in **Fig. 3a****.**

The apparatus 30 comprises an interface module 32 to receive a request related to a desired reach and optionally to a desired capacity that shall be achieved with an optical signal, for example via a fiber. Further, the apparatus 30 comprises a control module 34 which is configured to determine, based on the desired reach, a suitable combination of a modulation format and a FEC code for the optical signal. The control module 34 may have an interface to a memory module 36 storing a LUT, for example, similar to Table 2. Hence, in some embodiments, the modulation format may be looked up in a LUT. Likewise, the FEC code may be looked up in the LUT. Hence, the control module 34 may be configured to determine the combination of the modulation format and the FEC code by using the requested reach to access one or more entries of the LUT 36, wherein the one or more entries are indicative of a modulation format / FEC code combination fitting the desired reach.

In one embodiment, the table lookup may be implemented by searching for one or more entries stored the LUT 36, the one or more entries corresponding to a predetermined reach level (e.g. also stored the LUT) which is the closest larger reach level compared to the requested or desired reach. Referring to the example of Table 2, if a desired reach was 1.1, for example, the control module 34 would look up or select the stored/predetermined modulation format / FEC code combination corresponding to reach 1.25 (next higher stored reach) in Table 2, i.e., QPSK and 30% coding overhead. Here, reach 1.25 corresponds to the maximum reach of the combination of QPSK and a FEC code with 30% coding overhead. If a desired reach was 1.4, for example, the control module 34 would select the stored/predetermined modulation format / FEC code combination corresponding to (maximum) reach 1.65 (next higher stored reach), i.e., SP-QPSK and 20% coding overhead. For another example, if a desired reach was 0.3, the control module 34 would select the predetermined modulation format / FEC code combination corresponding to (maximum) reach 0.4 (next higher stored reach), i.e., 8QAM and 20% coding overhead.

Apart from performing table lookups also other mechanisms for determining the modulation format / FEC code combinations are possible. For example, the control module 34 may be configured to compute the modulation format / FEC code combination using algorithms which may depend on more parameters than the desired reach. Further parameters could be fiber quality parameters, parameters related to transmitter and/or receiver components, or other parameters defining a condition of an optical communication channel.

**Fig. 3b** illustrates a diagram plotting spectral efficiencies of the different modulation format and FEC code combinations of Table 2 versus their normalized reach, respectively. It can be observed that the modulation format and FEC code combinations employing the 20% overhead FEC code may close or reduce the performance gaps between adjacent modulation format and FEC code combinations employing the 30% overhead FEC code. Likewise, the modulation format and FEC code combinations employing the 30% overhead FEC code may close or reduce the performance gaps between adjacent modulation format FEC code combinations employing the 20% overhead FEC code. As can be seen from the plot, the spectral efficiency available when combining a respective modulation format with the second forward error correction code with for example 30% overhead is lower than the combination with the 20% overhead code. This may yield a maximum throughput at the (maximum) reach for the respective combination of the determined or selected modulation format and the determined or selected forward error correction code.

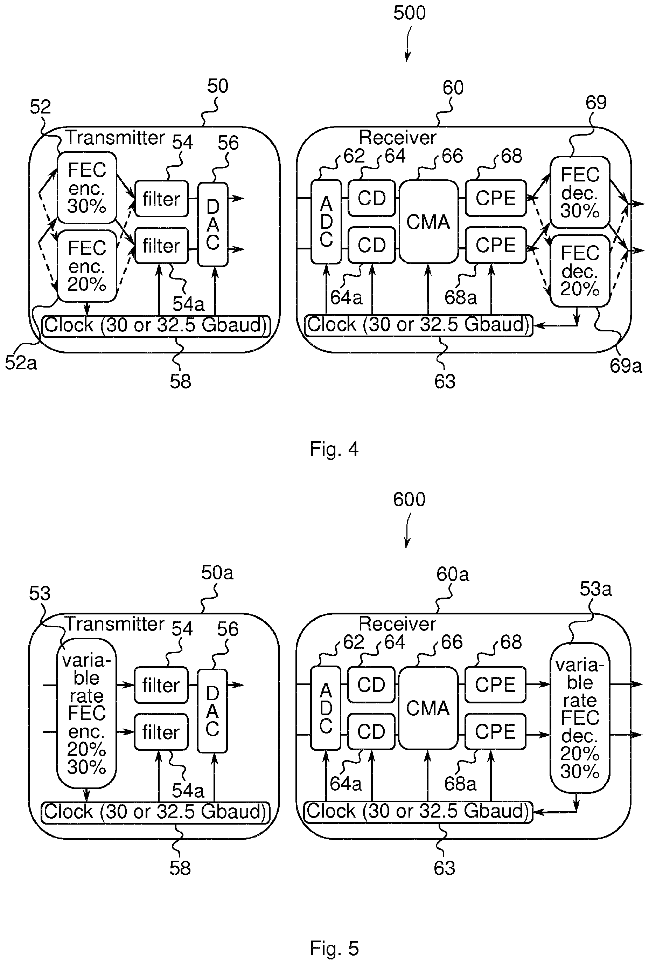

**Fig. 4** illustrates a block diagram of an example embodiment of a transmitter 50 (depicted on the left side) and an example embodiment of a receiver 60 (depicted on the right side) of an optical communication system 500.

At the transmitter side 50, input data is encoded either with a 30% overhead FEC encoder 52 or with a 20% overhead FEC encoder 52a. Encoded data for each polarization is then sent through filter modules 54, 54a for spectral shaping, respectively. The spectrally shaped data is then sent to a Digital-to-Analog-Converter (DAC) 56 which may be coupled to an optical In-phase/Quadrature (I/Q) modulator (not shown). A resulting symbol or baud rate depends on the FEC encoder 52, 52a selected at the transmitter side. The input bit rate of the FEC encoder 52 or 52a may be constant and usually amount to an integer part of a higher layer frame structure.

At the receiver 60, analog received signals from a coherent mixer may be digitalized by an Analog-to-Digital-Converter (ADC) 62. Further, chromatic dispersion 64, 64a of the digitalized data may then be compensated before a Constant Modulus Algorithm (CMA) module 66 allows for polarization separation and equalization. The signal phase for each polarization may then be tracked by a respective Carrier Phase Estimation (CPE) module 68, 68a before entering one of two FEC decoders 69, 69a depending on the FEC encoder selected at the transmitter side 50. A receiver clock 63 may be selected as a function of transmitter clock 58 (depending on the selected forward error correction code overhead). Clock speed and modulation format information may be exchanged by system management.

As shown in Fig. 4, one of two distinct FEC codes, a code C1 with for example 30% overhead and a code C2 with for example 20% overhead, both independently optimized for the respective overhead, may be selected. In an example implementation on an Application Specific Integrated Circuit (ASIC), both FEC codes may be implemented using dedicated circuits, for example. Only one decoder 69, 69a and encoder 52, 52a circuit may be active at a time while the other one is powered down. This may allow to save power and to achieve an optimized communication performance at the expense of a slightly increase in chip size due to several implementations being present.

**Fig. 5** illustrates further example embodiments of a transmitter 50a and a receiver 60a of the optical communication system 500. The transmitter 50a (depicted on the left side) and the receiver 60a (depicted on the right side) of the optical communication system 500 correspond in most details to the transmitter 50 and the receiver 60 of the optical communication system illustrated in Fig. 4, as described above.

However, the transmitter 50a comprises a variable rate FEC encoder 53. Correspondingly, the receiver 60a comprises a variable rate FEC decoder 53a. In one embodiment, the variable rate FEC encoder 53 and decoder 53a pair may be configured to operate for example with either 20% coding overhead or with 30% coding overhead. The FEC encoder at the transmitter side may take an input block of K information bits and generate *N* > *K* encoded output bits. In some embodiments, systematic codes may be used, which means that the *N* output bits contain the *K* input bits and the encoder appends the *N-K* computed parity bits. An example is a systematic Low Density Parity Check (LDPC) code.

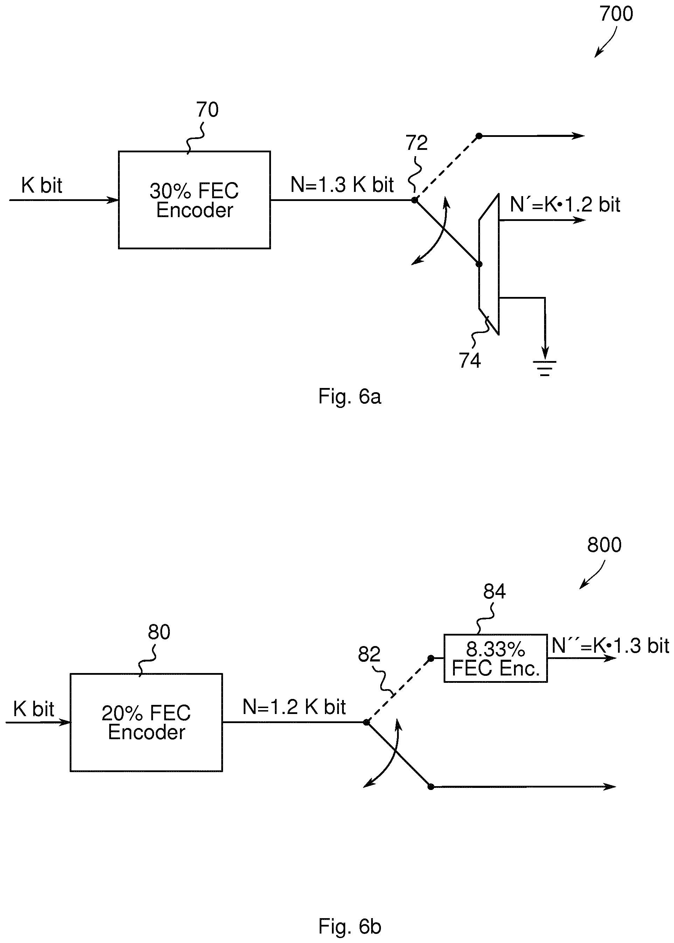

The decoder at the receiver side 60a, 53a may perform the reverse operation taking at its input either *N* (encoded) input bits or *N* likelihood values (in the case of soft decision decoders) and reconstructing the original block of *K* (decoded) information bits. If the information bit rate is for example fixed (e.g., to 100Gbits/s for one mode of operation) and if the speed of operation of the FEC encoder/decoder does not change, the bit rate defined by the number of *K* bits per second may be fixed. A variable rate code may be realized for example by starting from a mother code of 30% overhead and by puncturing some of the parity bits, i.e., not transmitting them. This is shown in the embodiment illustrated in Fig. 6a and described further below. Hence, the act of determining or selecting a first forward error correction code may comprise applying a second forward error correction code (having a higher coding overhead) and puncturing parity bits generated by the second forward error correction code.

**Fig. 6a** illustrates an embodiment 700 implementing a variable rate FEC code, where, if the mode of operation is set for example to 20% coding overhead (switch 72 in bottom position), 8.3% of the overall bits (i.e., 10% of the parity bits) are not transmitted. An input data block containing *K* bits is encoded by a FEC encoder 70 with for example 30% overhead to yield *N > K* encoded bits, with *N* = 1.3K bits, for example. By means of switch 72 it may be selected to puncture a certain number of parity bits to obtain *N*' = 1.2*K* bits. If puncturing is selected, the determined number of parity bits may for example be punctured at puncturing module 74. At the receiver, the punctured bits may for example be treated as being erased and a decoder may aim at recovering the information bits based on the non-erased parity bits.

In a further embodiment the variable rate code may for example be realized by starting from a first code of 20% overhead and further encoding the data encoded by the first code with a second forward error correction code with for example 8.33% overhead. This yields a forward error correction code with 30% overhead. Such an example embodiment of a variable FEC code, illustrated in **Fig. 6b****,** uses so-called code extension, where we may for example start from a first mother code of 20% overhead (see reference sign 80). If a second 30% coding overhead operation shall for example be selected (see reference sign 82), a second additional FEC code 84 of for example 8.333% overhead may generate additional parity bits which are appended to the original code word. In the example embodiment of Fig. 6b the second FEC encoder 82 operates on input bits which have already been encoded by first encoder 80. A decoder may for example use separate decoders to recover the code words, as depicted for example in Fig. 4. Usually it may be more advantageous to design both FEC codes such that a joint decoder can jointly decode both codes, as depicted for example in Fig. 5, and such that the decoder can operate at both overhead modes.

The method as described in the embodiments above may allow to minimize the unnecessary margins in a system by determining or selecting the best combination of modulation format and forward error correction code overhead to maximize the capacity (through format selection mainly) and optimizing the spectrum occupancy (by selecting the lowest FEC overhead if possible or selecting the largest one if required). The forward error correction code with the lowest overhead may also require lower power consumption.

Embodiments may provide a flexible apparatus located at the transmitter and/or receiver side which may easily be adapted to the current required reach of an optical communication system between the transmitter and receiver. With the apparatus, as described above, the reach of the optical communication system may easily be adapted with the same apparatus without the need of a modification of the components of the apparatus and as such of the transmitter and/or receiver.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks shall be understood as functional blocks comprising circuitry that is adapted for performing a certain function, respectively. Hence, a "module or entity for s.th." may as well be understood as a "module or entity being adapted or suited for s.th.". A module or entity being adapted for performing a certain function does, hence, not imply that such means necessarily is performing said function (at a given time instant).

Functions of various elements shown in the figures, including any functional blocks may be provided through the use of dedicated hardware, such as "a processor", "a controller", etc. as well as hardware capable of executing software in association with appropriate software. Moreover, any entity described herein as functional block, may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

Furthermore, the following claims are hereby incorporated into the Detailed Description, where each claim may stand on its own as a separate embodiment. While each claim may stand on its own as a separate embodiment, it is to be noted that - although a dependent claim may refer in the claims to a specific combination with one or more other claims - other embodiments may also include a combination of the dependent claim with the subject matter of each other dependent claim. Such combinations are proposed herein unless it is stated that a specific combination is not intended. Furthermore, it is intended to include also features of a claim to any other independent claim even if this claim is not directly made dependent to the independent claim.

It is further to be noted that methods disclosed in the specification or in the claims may be implemented by a device having means for performing each of the respective steps of these methods.

Further, it is to be understood that the disclosure of multiple steps or functions disclosed in the specification or claims may not be construed as to be within the specific order. Therefore, the disclosure of multiple steps or functions will not limit these to a particular order unless such steps or functions are not interchangeable for technical reasons. Furthermore, in some embodiments a single step may include or may be broken into multiple sub steps. Such sub steps may be included and part of the disclosure of this single step unless explicitly excluded.

## Claims

1. Method (10) for an optical communication system, comprising:
providing (12) information on a desired reach of an optical signal; and
determining (14), based on the desired reach, a combination of a modulation format and a forward error correction code for the optical signal,
wherein the modulation format is determined (141) from a plurality of modulation formats, wherein modulation symbols of different modulation formats comprise different numbers of bits, and
wherein the forward error correction code is determined (142) from a plurality of different forward error correction codes having different code rates,
wherein the plurality of modulation formats comprises a first and a second modulation format, wherein a modulation symbol of the first modulation format comprises a larger numbers of bits than a modulation symbol of the second modulation format,
wherein a signal-to-noise ratio at which a predefined quality criterion is fulfilled for a signal modulated with the first modulation format differs from a signal-to-noise ratio at which the predefined quality criterion is fulfilled for the signal modulated with the second modulation format by a predefined performance difference,
wherein a coding gain difference between a first and a second forward error correction code of the plurality of forward error correction codes substantially corresponds to a ratio between the performance difference and a number of the plurality of forward error correction codes.

2. The method (10) of claim 1, wherein a modulation symbol of the first modulation format comprises in average at most one bit more than a modulation symbol of the second modulation format.

3. The method (10) of claim 1, wherein plurality of modulation formats includes two or more adjacent formats of the following modulation formats:
Set Partitioned Quaternary Phase-Shift Keying (SP-QPSK);
Quaternary Phase-Shift Keying (QPSK);
Set Partitioned 8-Quadrature Amplitude Modulation (SP-8QAM);
8-Quadrature Amplitude Modulation (8QAM);
16-Quadrature Amplitude Modulation (16QAM);
32-Quadrature Amplitude Modulation (32QAM);
64-Quadrature Amplitude Modulation (64QAM);
128-Quadrature Amplitude Modulation (128QAM); and
256-Quadrature Amplitude Modulation (256QAM).

4. The method (10) of claim 1, wherein the plurality of forward error correction codes comprises a first and a second forward error correction code, wherein a code rate of the first forward error correction code is larger than the code rate of the second forward error correction code.

5. The method (10) of claim 4, wherein the code rate of the first forward error correction code is 5/6 ± 5% thereof, and wherein the code rate of the second forward error correction code is 10/13 ± 5% thereof.

6. The method (10) of claim 4, wherein determining (142) the forward error correction comprises selecting the second forward error correction code if a maximum reach of a determined modulation format with the first forward error correction code is smaller than the desired reach.

7. The method (10) of claim 4, wherein the plurality of modulation formats comprises a first and a second modulation format, wherein modulation symbols of the first modulation format comprise a larger numbers of bits than modulation symbols of the second modulation format,
wherein determining (141) the modulation format comprises determining the second modulation format and the first forward error correction code if a reach of the first modulation format with the second forward error correction code is smaller than the desired reach.

8. The method (10) of claim 4, wherein determining the first forward error correction code comprises applying the second forward error correction code and puncturing parity bits generated by the second forward error correction code or, wherein determining the second forward error correction code comprises concatenating the first and a further forward error correction code to yield the second forward error correction code.

9. The method (10) of claim 1, further comprising:
transmitting (16) information on the combination of the determined modulation format and the determined forward error correction code to a receiver of the optical signal.

10. The method (10) of claim 1, wherein determining (14) the combination of the modulation format and the forward error correction code comprises using the desired reach to access one or more entries of a Lookup Table (LUT) indicative of a combination of a modulation format and a forward error correction code corresponding to the desired reach.

11. Method (20) for receiving a forward error encoded and modulated optical signal, comprising:
receiving (22) information about a combination of a modulation format and a forward error correction code of the optical signal;
determining (24), based on the received information, one of a plurality of modulation formats to demodulate the optical signal, wherein modulation symbols of different modulation formats comprise different numbers of bits; and
determining (26), based on the received information, one of a plurality of different forward error correction codes having different code rates to decode the optical signal
wherein a signal-to-noise ratio at which a predefined quality criterion is fulfilled for a signal modulated with the first modulation format differs from a signal-to-noise ratio at which the predefined quality criterion is fulfilled for the signal modulated with the second modulation format by a predefined performance difference,
wherein a coding gain difference between a first and a second forward error correction code of the plurality of forward error correction codes substantially corresponds to a ratio between the performance difference and a number of the plurality of forward error correction codes.

12. Apparatus for an optical communication system, comprising:
means for providing information on a desired reach of an optical signal; and
means for determining, based on the desired reach, a combination of a modulation format and a forward error correction code for the optical signal,
wherein the means for determining is configured to determine the modulation format from a plurality of modulation formats, wherein modulation symbols of different modulation formats comprise different numbers of bits, and
wherein the means for determining is configured to determine the forward error correction code from a plurality of different forward error correction codes having different code rates,
wherein the plurality of modulation formats comprises a first and a second modulation format, wherein a modulation symbol of the first modulation format comprises a larger numbers of bits than a modulation symbol of the second modulation format,
wherein a signal-to-noise ratio at which a predefined quality criterion is fulfilled for a signal modulated with the first modulation format differs from a signal-to-noise ratio at which the predefined quality criterion is fulfilled for the signal modulated with the second modulation format by a predefined performance difference,
wherein a coding gain difference between a first and a second forward error correction code of the plurality of forward error correction codes substantially corresponds to a ratio between the performance difference and a number of the plurality of forward error correction codes.

13. Apparatus for receiving a forward error encoded and modulated optical signal, comprising:
means for receiving information about a combination of a modulation format and a forward error correction code of the optical signal;
means for determining, based on the received information, one of a plurality of modulation formats to demodulate the optical signal, wherein modulation symbols of different modulation formats comprise different numbers of bits; and
means for determining, based on the received information, one of a plurality of different forward error correction codes having different code rates to decode the optical signal,
wherein a signal-to-noise ratio at which a predefined quality criterion is fulfilled for a signal modulated with the first modulation format differs from a signal-to-noise ratio at which the predefined quality criterion is fulfilled for the signal modulated with the second modulation format by a predefined performance difference,
wherein a coding gain difference between a first and a second forward error correction code of the plurality of forward error correction codes substantially corresponds to a ratio between the performance difference and a number of the plurality of forward error correction codes.

## Patentansprüche

1. Verfahren (10) für ein optisches Kommunikationssystem, umfassend:
Bereitstellen (12) einer Information über eine gewünschte Reichweite eines optischen Signals; und
Bestimmen (14), basierend auf der gewünschten Reichweite, einer Kombination eines Modulationsformats und eines Vorwärtsfehlerkorrekturcodes für das optische Signal,
wobei das Modulationsformat aus einer Vielzahl von Modulationsformaten bestimmt (141) wird, wobei die Modulationssymbole unterschiedlicher Modulationsformate unterschiedliche Anzahlen von Bits umfassen, und
wobei der Vorwärtsfehlerkorrekturcode aus einer Vielzahl von verschiedenen Vorwärtsfehlerkorrekturcodes mit unterschiedlichen Codierraten bestimmt (142) wird,
wobei die Vielzahl von Modulationsformaten ein erstes und ein zweites Modulationsformat umfasst, wobei ein Modulationssymbol des ersten Modulationsformats eine größere Anzahl von Bits umfasst als ein Modulationssymbol des zweiten Modulationsformats,
wobei ein Signal-Rausch-Verhältnis, bei dem ein vordefiniertes Qualitätskriterium für ein mit dem ersten Modulationsformat moduliertes Signal erfüllt ist, von einem Signal-Rausch-Verhältnis abweicht, bei dem das vordefinierte Qualitätskriterium für das mit dem zweiten Modulationsformat durch einen vordefinierten Leistungsunterschied modulierte Signal erfüllt ist,
wobei eine Codierverstärkungsdifferenz zwischen einem ersten und einem zweiten Vorwärtsfehlerkorrekturcode der Vielzahl von Vorwärtsfehlerkorrekturcodes im Wesentlichen einem Verhältnis zwischen dem Leistungsunterschied und einer Anzahl der Vielzahl von Vorwärtsfehlerkorrekturcodes entspricht.

2. Verfahren (10) nach Anspruch 1, wobei ein Modulationssymbol des ersten Modulationsformats durchschnittlich höchstens ein Bit mehr als ein Modulationssymbol des zweiten Modulationsformats umfasst.

3. Verfahren (10) nach Anspruch 1, wobei die Vielzahl von Modulationsformaten zwei oder mehr benachbarte Formate der folgenden Modulationsformate umfasst:
satzpartitionierte quaternäre Phasenumtastung (Set Partitioned Quaternary Phase-Shift Keying, SP-QPSK);
quaternäre Phasenumtastung (Quaternary Phase-Shift Keying, QPSK);
satzpartitionierte 8-Quadraturamplitudenmodulation (Set Partitioned 8-Quadrature Amplitude Modulation, SP-8QAM);
8-Quadraturamplitudenmodulation (8-Quadrature Amplitude Modulation, 8QAM);
16-Quadraturamplitudenmodulation (16QAM);
32-Quadraturamplitudenmodulation (32QAM);
64-Quadraturamplitudenmodulation (64QAM);
128-Quadraturamplitudenmodulation (128QAM); und
256-Quadraturamplitudenmodulation (256QAM).

4. Verfahren (10) nach Anspruch 1, wobei die Vielzahl von Vorwärtsfehlerkorrekturcodes einen ersten und einen zweiten Vorwärtsfehlerkorrekturcode umfasst, wobei eine Codierrate des ersten Vorwärtsfehlerkorrekturcodes größer als die Codierrate des zweiten Vorwärtsfehlerkorrekturcodes ist.

5. Verfahren (10) nach Anspruch 4, wobei die Codierrate des ersten Vorwärtsfehlerkorrekturcodes 5/6 ± 5 % davon ist und wobei die Codierrate des zweiten Vorwärtsfehlerkorrekturcodes 10/13 ± 5 % davon ist.

6. Verfahren (10) nach Anspruch 4, wobei das Bestimmen (142) der Vorwärtsfehlerkorrektur das Auswählen des zweiten Vorwärtsfehlerkorrekturcodes umfasst, wenn eine maximale Reichweite eines bestimmten Modulationsformats mit dem ersten Vorwärtsfehlerkorrekturcode kleiner als die gewünschte Reichweite ist.

7. Verfahren (10) nach Anspruch 4, wobei die Vielzahl von Modulationsformaten ein erstes und ein zweites Modulationsformat umfasst, wobei die Modulationssymbole des ersten Modulationsformats eine größere Anzahl von Bits umfassen als die Modulationssymbole des zweiten Modulationsformats,
wobei das Bestimmen (141) des Modulationsformats das Bestimmen des zweiten Modulationsformats und des ersten Vorwärtsfehlerkorrekturcodes umfasst, wenn eine Reichweite des ersten Modulationsformats mit dem zweiten Vorwärtsfehlerkorrekturcode kleiner als die gewünschte Reichweite ist.

8. Verfahren (10) nach Anspruch 4, wobei das Bestimmen des ersten Vorwärtsfehlerkorrekturcodes das Anwenden des zweiten Vorwärtsfehlerkorrekturcodes und die Punktierung von Paritätsbits umfasst, die durch den zweiten Vorwärtsfehlerkorrekturcode erzeugt werden, oder wobei das Bestimmen des zweiten Vorwärtsfehlerkorrekturcodes die Verkettung des ersten und eines weiteren Vorwärtsfehlerkorrekturcodes umfasst, um den zweiten Vorwärtsfehlerkorrekturcode zu erhalten.

9. Verfahren (10) nach Anspruch 1, ferner umfassend:
Übertragen (16) einer Information über die Kombination des bestimmten Modulationsformats und des bestimmten Vorwärtsfehlerkorrekturcodes an einen Empfänger des optischen Signals.

10. Verfahren (10) nach Anspruch 1, wobei das Bestimmen (14) der Kombination des Modulationsformats und des Vorwärtsfehlerkorrekturcodes das Verwenden der gewünschten Reichweite umfasst, um auf einen oder mehrere Einträge einer Nachschlagetabelle (Lookup Table, LUT) zuzugreifen, die eine Kombination eines Modulationsformats und eines Vorwärtsfehlerkorrekturcodes anzeigen, die der gewünschten Reichweite entsprechen.

11. Verfahren (20) zum Empfangen eines vorwärtsfehlerkorrekturcodierten und modulierten optischen Signals, umfassend:
Empfangen (22) einer Information über eine Kombination eines Modulationsformats und eines Vorwärtsfehlerkorrekturcodes des optischen Signals;
Bestimmen (24), basierend auf der empfangenen Information, eines von einer Vielzahl von Modulationsformaten zum Demodulieren des optischen Signals, wobei die Modulationssymbole unterschiedlicher Modulationsformate unterschiedliche Anzahlen von Bits umfassen; und
Bestimmen (26), basierend auf der empfangenen Information, eines von einer Vielzahl von verschiedenen Vorwärtsfehlerkorrekturcodes mit unterschiedlichen Codierraten, um das optische Signal zu dekodieren,
wobei ein Signal-Rausch-Verhältnis, bei dem ein vordefiniertes Qualitätskriterium für ein mit dem ersten Modulationsformat moduliertes Signal erfüllt ist, von einem Signal-Rausch-Verhältnis abweicht, bei dem das vordefinierte Qualitätskriterium für das mit dem zweiten Modulationsformat durch einen vordefinierten Leistungsunterschied modulierte Signal erfüllt ist,
wobei eine Codierverstärkungsdifferenz zwischen einem ersten und einem zweiten Vorwärtsfehlerkorrekturcode der Vielzahl von Vorwärtsfehlerkorrekturcodes im Wesentlichen einem Verhältnis zwischen dem Leistungsunterschied und einer Anzahl der Vielzahl von Vorwärtsfehlerkorrekturcodes entspricht.

12. Vorrichtung für ein optisches Kommunikationssystem, umfassend:
Mittel zum Bereitstellen einer Information über eine gewünschte Reichweite eines optischen Signals; und
Mittel zum Bestimmen, basierend auf der gewünschten Reichweite, einer Kombination eines Modulationsformats und eines Vorwärtsfehlerkorrekturcodes für das optische Signal,
wobei das Mittel zum Bestimmen konfiguriert ist, um das Modulationsformat von einer Vielzahl von Modulationsformaten zu bestimmen, wobei die Modulationssymbole unterschiedlicher Modulationsformate unterschiedliche Anzahlen von Bits umfassen, und
wobei das Mittel zum Bestimmen konfiguriert ist, um den Vorwärtsfehlerkorrekturcode von einer Vielzahl von verschiedenen Vorwärtsfehlerkorrekturcodes mit unterschiedlichen Codierraten zu bestimmen,
wobei die Vielzahl von Modulationsformaten ein erstes und ein zweites Modulationsformat umfasst, wobei ein Modulationssymbol des ersten Modulationsformats eine größere Anzahl von Bits umfasst als ein Modulationssymbol des zweiten Modulationsformats,
wobei ein Signal-Rausch-Verhältnis, bei dem ein vordefiniertes Qualitätskriterium für ein mit dem ersten Modulationsformat moduliertes Signal erfüllt ist, von einem Signal-Rausch-Verhältnis abweicht, bei dem das vordefinierte Qualitätskriterium für das mit dem zweiten Modulationsformat durch einen vordefinierten Leistungsunterschied modulierte Signal erfüllt ist,
wobei eine Codierverstärkungsdifferenz zwischen einem ersten und einem zweiten Vorwärtsfehlerkorrekturcode der Vielzahl von Vorwärtsfehlerkorrekturcodes im Wesentlichen einem Verhältnis zwischen dem Leistungsunterschied und einer Anzahl der Vielzahl von Vorwärtsfehlerkorrekturcodes entspricht.

13. Vorrichtung zum Empfangen eines vorwärtsfehlerkorrekturcodierten und modulierten optischen Signals, umfassend:
Mittel zum Empfangen einer Information über eine Kombination eines Modulationsformats und eines Vorwärtsfehlerkorrekturcodes des optischen Signals;
Mittel zum Bestimmen, basierend auf der empfangenen Information, eines von einer Vielzahl von Modulationsformaten zum Demodulieren des optischen Signals, wobei die Modulationssymbole unterschiedlicher Modulationsformate unterschiedliche Anzahlen von Bits umfassen; und
Mittel zum Bestimmen, basierend auf der empfangenen Information, eines von einer Vielzahl von verschiedenen Vorwärtsfehlerkorrekturcodes mit unterschiedlichen Codierraten, um das optische Signal zu decodieren,
wobei ein Signal-Rausch-Verhältnis, bei dem ein vordefiniertes Qualitätskriterium für ein mit dem ersten Modulationsformat moduliertes Signal erfüllt ist, von einem Signal-Rausch-Verhältnis abweicht, bei dem das vordefinierte Qualitätskriterium für das mit dem zweiten Modulationsformat durch einen vordefinierten Leistungsunterschied modulierte Signal erfüllt ist,
wobei eine Codierverstärkungsdifferenz zwischen einem ersten und einem zweiten Vorwärtsfehlerkorrekturcode der Vielzahl von Vorwärtsfehlerkorrekturcodes im Wesentlichen einem Verhältnis zwischen dem Leistungsunterschied und einer Anzahl der Vielzahl von Vorwärtsfehlerkorrekturcodes entspricht.

## Revendications

1. Procédé (10) pour un système de communication optique, comprenant :
la fourniture (12) d'informations sur une portée souhaitée d'un signal optique ; et
la détermination (14), sur la base de la portée souhaitée, d'une combinaison d'un format de modulation et d'un code de correction d'erreur sans voie de retour pour le signal optique,
dans lequel le format de modulation est déterminé (141) à partir d'une pluralité de formats de modulation, les symboles de modulation de différents formats de modulation comprenant des nombres de bits différents, et
dans lequel le code de correction d'erreur sans voie de retour est déterminé (142) à partir d'une pluralité de codes de correction d'erreur sans voie de retour différents ayant des rendements de codage différents,
dans lequel la pluralité de formats de modulation comprend un premier et un second formats de modulation, un symbole de modulation du premier format de modulation comprenant un plus grand nombre de bits qu'un symbole de modulation du second format de modulation,
dans lequel un rapport signal sur bruit auquel un critère de qualité prédéfini est satisfait pour un signal modulé au moyen du premier format de modulation diffère d'un rapport signal sur bruit auquel le critère de qualité prédéfini est satisfait pour le signal modulé au moyen du second format de modulation d'une différence de performance prédéterminée,
dans lequel une différence de gain de codage entre un premier et un second codes de correction d'erreur sans voie de retour de la pluralité de codes de correction d'erreur sans voie de retour correspond sensiblement à un rapport entre la différence de performance et un nombre de la pluralité de codes de correction d'erreur sans voie de retour.

2. Procédé (10) selon la revendication 1, dans lequel un symbole de modulation du premier format de modulation comprend en moyenne au plus un bit de plus qu'un symbole de modulation du second format de modulation.

3. Procédé (10) selon la revendication 1, dans lequel la pluralité de formats de modulation inclut deux formats adjacents ou plus parmi les formats de modulation suivants :
Modulation par déplacement de phase quadrivalente à partitionnement (SP-QPSK) ;
Modulation par déplacement de phase quadrivalente (QPSK) ;
Modulation d'amplitude en quadrature à 8 états à partitionnement (SP-8QAM) ;
Modulation d'amplitude en quadrature à 8 états (8QAM) ;
Modulation d'amplitude en quadrature à 16 états (16QAM) ;
Modulation d'amplitude en quadrature à 32 états (32QAM) ;
Modulation d'amplitude en quadrature à 64 états (64QAM) ;
Modulation d'amplitude en quadrature à 128 états (128QAM) ; et
Modulation d'amplitude en quadrature à 256 états (256QAM).

4. Procédé (10) selon la revendication 1, dans lequel la pluralité de codes de correction d'erreur sans voie de retour comprend un premier et un second codes de correction d'erreur sans voie de retour, un rendement de codage du premier code de correction d'erreur sans voie de retour étant supérieur au rendement de codage du second code de correction d'erreur sans voie de retour.

5. Procédé (10) selon la revendication 4, dans lequel le rendement de codage du premier code de correction d'erreur sans voie de retour est égal à 5/6 ± 5 % du code et dans lequel le rendement de codage du second code de correction d'erreur sans voie de retour est égal à 10/13 ± 5 % du code.

6. Procédé (10) selon la revendication 4, dans lequel la détermination (142) du code de correction d'erreur sans voie de retour comprend la sélection du second code de correction d'erreur sans voie de retour si une portée maximale d'un format de modulation déterminé avec le premier code de correction d'erreur sans voie de retour est inférieure à la portée souhaitée.

7. Procédé (10) selon la revendication 4, dans lequel la pluralité de formats de modulation comprend un premier et un second formats de modulation, les symboles de modulation du premier format de modulation comprenant un plus grand nombre de bits que les symboles de modulation du second format de modulation,
dans lequel la détermination (141) du format de modulation comprend la détermination du second format de modulation et du premier code de correction d'erreur sans voie de retour si une portée du premier format de modulation avec le second code de correction d'erreur sans voie de retour est inférieure à la portée souhaitée.

8. Procédé (10) selon la revendication 4, dans lequel la détermination du premier code de correction d'erreur sans voie de retour comprend l'application du second code de correction d'erreur sans voie de retour et le prélèvement de bits de parité générés par le second code de correction d'erreur sans voie de retour ou, dans lequel la détermination du second code de correction d'erreur sans voie de retour comprend la concaténation du premier et d'un autre code de correction d'erreur sans voie de retour pour constituer le second code de correction d'erreur sans voie de retour.

9. Procédé (10) selon la revendication 1, comprenant en outre :
la transmission (16) d'informations sur la combinaison du format de modulation déterminé et du code de correction d'erreur sans voie de retour déterminé à un destinataire du signal optique.

10. Procédé (10) selon la revendication 1, dans lequel la détermination (14) de la combinaison du format de modulation et du code de correction d'erreur sans voie de retour comprend l'utilisation de la portée souhaitée pour accéder à une ou plusieurs entrées d'une table de consultation (LUT) indiquant une combinaison d'un format de modulation et d'un code de correction d'erreur sans voie de retour correspondant à la portée souhaitée.

11. Procédé (20) de réception d'un signal optique codé en correction d'erreur sans voie de retour et modulé, comprenant :
la réception (22) d'informations sur une combinaison d'un format de modulation et d'un code de correction d'erreur sans voie de retour du signal optique ;
la détermination (24), sur la base des informations reçues, d'un d'une pluralité de formats de modulation pour démoduler le signal optique, les symboles de modulation de différents formats de modulation comprenant des nombres de bits différents ; et
la détermination (26), sur la base des informations reçues, d'un d'une pluralité de codes de correction d'erreur sans voie de retour différents ayant des rendements de codage différents pour décoder le signal optique,
dans lequel un rapport signal sur bruit auquel un critère de qualité prédéfini est satisfait pour un signal modulé au moyen du premier format de modulation diffère d'un rapport signal sur bruit auquel le critère de qualité prédéfini est satisfait pour le signal modulé au moyen du second format de modulation d'une différence de performance prédéterminée,
dans lequel une différence de gain de codage entre un premier et un second codes de correction d'erreur sans voie de retour de la pluralité de codes de correction d'erreur sans voie de retour correspond sensiblement à un rapport entre la différence de performance et un nombre de la pluralité de codes de correction d'erreur sans voie de retour.

12. Appareil pour un système de communication optique, comprenant :
des moyens destinés à fournir des informations sur une portée souhaitée d'un signal optique ; et
des moyens destinés à déterminer, sur la base de la portée souhaitée, une combinaison d'un format de modulation et d'un code de correction d'erreur sans voie de retour pour le signal optique,
dans lequel les moyens de détermination sont configurés pour déterminer le format de modulation à partir d'une pluralité de formats de modulation, les symboles de modulation de formats de modulation différents comprenant des nombres de bits différents, et dans lequel les moyens de détermination sont configurés pour déterminer le code de correction d'erreur sans voie de retour à partir d'une pluralité de codes de correction d'erreur sans voie de retour différents ayant des rendements de codage différents,
dans lequel la pluralité de formats de modulation comprend un premier et un second formats de modulation, un symbole de modulation du premier format de modulation comprenant un plus grand nombre de bits qu'un symbole de modulation du second format de modulation,
dans lequel un rapport signal sur bruit auquel un critère de qualité prédéfini est satisfait pour un signal modulé au moyen du premier format de modulation diffère d'un rapport signal sur bruit auquel le critère de qualité prédéfini est satisfait pour le signal modulé au moyen du second format de modulation d'une différence de performance prédéterminée,
dans lequel une différence de gain de codage entre un premier et un second codes de correction d'erreur sans voie de retour de la pluralité de codes de correction d'erreur sans voie de retour correspond sensiblement à un rapport entre la différence de performance et un nombre de la pluralité de codes de correction d'erreur sans voie de retour.

13. Appareil de réception d'un signal optique codé en correction d'erreur sans voie de retour et modulé, comprenant :
des moyens destinés à recevoir des informations sur une combinaison d'un format de modulation et d'un code de correction d'erreur sans voie de retour du signal optique ;
des moyens destinés à déterminer, sur la base des informations reçues, l'un d'une pluralité de formats de modulation pour démoduler le signal optique, les symboles de modulation de formats de modulation différents comprenant des nombres de bits différents ; et
des moyens destinés à déterminer, sur la base des informations reçues, l'un d'une pluralité de codes de correction d'erreur sans voie de retour différents ayant des rendements de codage différents pour décoder le signal optique, et
dans lequel un rapport signal sur bruit auquel un critère de qualité prédéfini est satisfait pour un signal modulé au moyen du premier format de modulation diffère d'un rapport signal sur bruit auquel le critère de qualité prédéfini est satisfait pour le signal modulé au moyen du second format de modulation d'une différence de performance prédéterminée,
dans lequel une différence de gain de codage entre un premier et un second codes de correction d'erreur sans voie de retour de la pluralité de codes de correction d'erreur sans voie de retour correspond sensiblement à un rapport entre la différence de performance et un nombre de la pluralité de codes de correction d'erreur sans voie de retour.
